# EUROPEAN PATENT SPECIFICATION

(11) **EP 1 336 883 B1**
(45) Date of publication and mention of the grant of the patent: **02.11.2006**
(21) Application number: 03100275.1
(22) Date of filing: 10.02.2003
(51) Int. Cl.: G02B 6/42

(54) **Optical Coupling Element and Transceiver Using The Same**
Optisches Kopplungselement und Transceiver, der es benutzt
Elément optique de couplage et transmetteur-récepteur l'utilisant

(30) Priority: 15.02.2002 JP 2002039073
(43) Date of publication of application: 20.08.2003
(73) Proprietor: OMRON CORPORATION, Kyoto-shi, Kyoto 600-8530 (JP)
(72) Inventor: Terakawa, Yukari c/o Omron Corpoation, Shimogyo-ku, Kyoto-shi Kyoto, 600-8530 (JP); Hosokawa, Hayami c/o Omron Corporation, Shimogyo-ku, Kyoto-shi Kyoto 600-8530 (JP); Kitajima, Yasunari c/o Omron Corparation, Shimogyo-ku Kyoto, 600-8530 (JP); Sumino, Toshifumi c/o Omron Corporation, Shimogyo-ku Kyoto, 600-8530 (JP); Ishida, Yoshihisa c/o Omron Corporation, Shimogyo-ku Kyoto 600-8530 (JP)
(74) Representative: Weihs, Bruno Konrad

(56) References cited:
- EP-A- 0 718 657
- EP-A- 1 109 041
- EP-A- 1 253 447
- FR-A- 2 802 306
- US-A- 4 703 472
- US-A- 4 838 645
- US-A- 6 075 913
- US-B1- 6 342 871

## Description

### BACKGROUND OF THE INVENTION

### Field of the Invention

The present invention relates to an optical element and an optical component using the same. More specifically, the invention relates to an optical element for reflecting transmitted light and, thereby, converting a light path and converging light, and an optical device using the same.

### Description of the Background Art

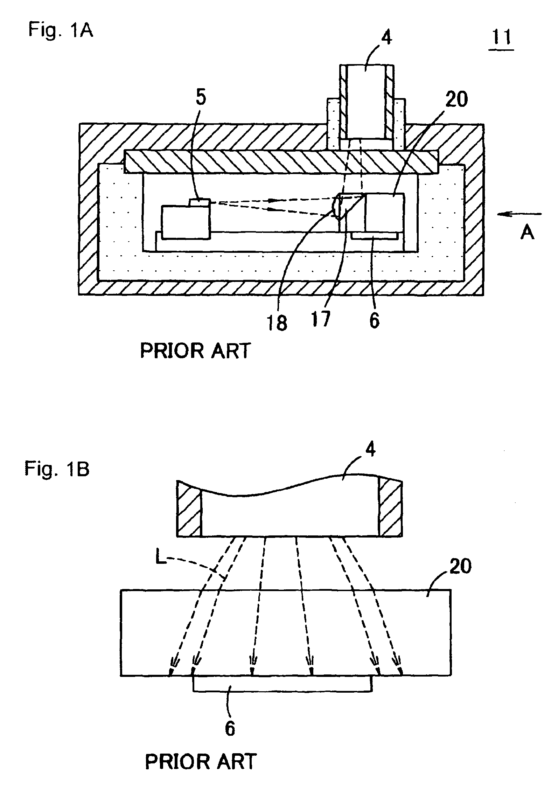

An optical transceiver 11 in the prior art is explained in reference to Figs. 1A and 1B. Fig. 1A shows a cross sectional view of a conventional optical transceiver 11, while Fig. 1B shows an enlarged view of the light receiving system thereof viewed from the direction A. Dotted lines in Figs. 1A and 1B show light paths . In this optical transceiver 11, as shown in Fig. 1A, light ejected from a light projecting element 5 is converged by a lens 18. Thereafter, the light path thereof is bent by about 90 degrees by inclined surfaces of a triangular prism 17, and is combined onto the end surface of an optical fiber 4. Light L ejected from the optical fiber 4 penetrates into a light guide portion 20 and is received by a light receiving element 6. U.S. patent No 6,075,913 to Cohen et al., European patent application EP 1 253 447 A2 to Omron Corporation, U.S. patent No 4,403,472 to Blumentritt et al. and European patent application EP 1 109 041 A1 to Japan Aviation Electronics Industry each disclose examples of optical coupler devices.

At present, in the art of optical communications, there is a demand for high communication speed, and along with this demand, there is another demand for compact size of a light receiving element in an optical transceiver. However, in this optical transceiver 11, wherein an optical element of a light receiving system arranged between the light receiving element 6 and the optical fiber 4 does not converge light, light L ejected from the optical fiber 4 will spreadas shown in Fig. 1B. Therefore, if the size of the light receiving element 6 is made small, the loss of light L will become large. And, in this optical transceiver 11 of such a structure, because the light receiving surface of the light receiving element 6 faces the direction of the optical fiber 4, light ejected from the light projecting element 5 and reflected by the end surface of the optical fiber 4 will be received as returned light by the light receiving element 6, causing cross talk. This has been a problem in the prior art.

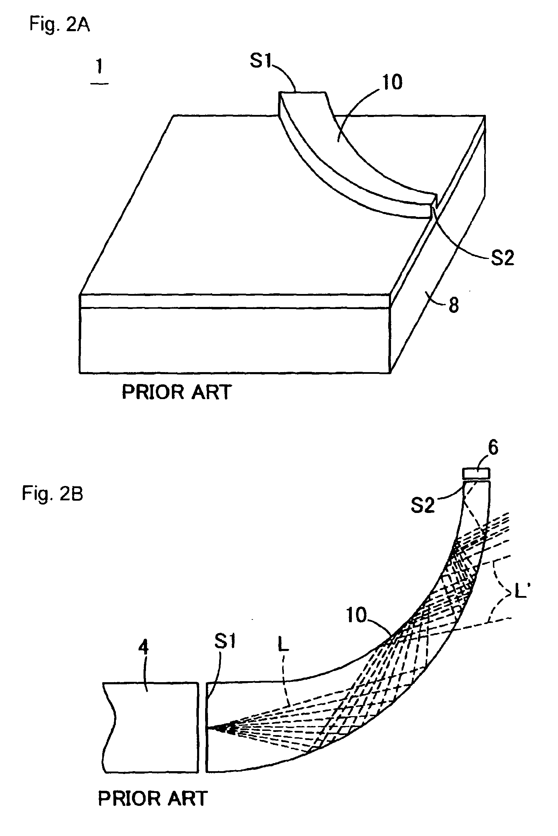

When light ejected from the light projecting element 5 is to be guided to the optical fiber 4, or light going out from the optical fiber 4 is to be guided to the light receiving element 6, if a light path is converted (deflected) and an optical element for converging light is used, light receiving efficiency may be increased. As an example of such an optical element, a light path converting element 1 is explained in reference to Figs. 2A and 2B. Fig. 2A shows a perspective view of the light path converting element 1, while Fig. 2B shows a top view of a channel type curved wave guide 10 whose cross section area varies with the incoming surface S1 and the outgoing surface S2 thereof, and also shows light behaviors in the curved wave guide 10. In this light path converting element 1, a curved wave guide 10 made of a transparent resin is formed on the upper surface of a substrate 8. When light L going through the optical fiber 4 comes from the incoming surface S1 into the wave guide 10, light L that goes into the curved wave guide 10 repeats full reflection on the upper and lower surfaces and left and right side surfaces of the curved wave guide 10 and goes through the curved wave guide 10. Light L ejected from the outgoing surface S2 of the curved wave guide 10 is received by the light receiving element 6 that is arranged to face the outgoing surface S2. Therefore, the transmitting direction of the light L going through the curved wave guide 10 is bent by the curve of the curved wave guide 10. Because the area of the outgoing surface S2 of the curved wave guide 10 is made smaller than that of the incoming surface S1, light L ejected from the outgoing surface S2 of the curved wave guide 10 is converged, and is received efficiently by the light receiving element 6 with a small light receiving area.

However, in such a curved wave guide 10, in the case
wherein the area of the incoming surface S1 is not equal to that of the outgoing surface S2, the curvature at the external circumferential surface will become large. Therefore, as shown in Fig. 2B, light going through the inside of the wave guide 10 leaks out from the external circumferential surface of the curved wave guide 10, causing lost light L', and light transmitting efficiency will be deteriorated. Therefore, in cases involving converting a light path in an optical fiber 4 of the same diameter or so, it was possible to make cross sectional areas of a wave guide uniform and there was no problem. However, in cases involving converging light L ejected from the optical fiber 4 and receive light by the light receiving element 6 of a small light receiving area, light transmitting loss would become large. As a result, such a conventional curved wave guide appeared inconvenient. This has been another problem in the prior art.

### SUMMARY OF THE INVENTION

An optical element according to the present invention may be preferably embodied as one comprising a given refractive index translucent material.The optical element is equipped with a light incoming surface, a light outgoing surface that is not parallel with the light incoming surface, a pair of planes that are facing each other, and a curved light path converting surface, the optical element being characterized in that the pair of planes is formed perpendicular to the light incoming surface and the light outgoing surface, and the curved light path converting surface is formed nearly perpendicular to the pair of planes, and the shape thereof is defined so as to reflect and converge light coming from the light incoming surface, and the light coming into the optical element from the light incoming surface goes toward the light path converting surface in between the pair of planes, and via a light path for the light to be reflected and converged on the light path converting surface and go out from the light outgoing surface, and when the light path is projected onto a plane parallel to the planes, the light is reflected only on the light path converting surface and the distance between the pair of planes of the optical element becomes smaller gradually with the distance from the light incoming surface along the light path converting surface toward the light outgoing surface as described in claim 1.

Another optical element according to the present invention may be preferably embodied as one as described in claim 1 wherein the light path converting surface is structured into a curved polygon. Another optical element according to the present invention may be preferably embodied as one as described in claim 1 wherein the light path converting surface is covered with a reflective film, and the light coming from the light incoming surface into the optical element towards the light outgoing surface is reflected on the reflective film and goes out from the light outgoing surface. Another optical element according to the present invention may be preferably embodied as one as described in claim 1 wherein a half mirror is formed on the light path converting surface, and part of the light coming from the light incoming surface into the optical element penetrates through the light path converting surface, and other of the light is reflected on the light path converting surface and goes out from the light outgoing surface. Another optical element according to the present invention may be preferably embodied as one as described in claim 1 wherein a grating is formed on the light path converting surface, light of a specific wavelength among the light coming from the light incoming surface into the optical element penetrates through the light path converting surface, and light of other wavelength is reflected on the light path converting surface and goes out from the light outgoing surface. Another optical element according to the present invention may be preferably embodied as one as described in claim 1 wherein plural curved surfaces having different light focuses are formed on the light path converting surface, and when the light coming from the light incoming surface into the optical element reflects on the light path converting surface, the light is branched by the plural curved surfaces, and goes out from different portions of the light outgoing surface. Another optical element according to the present invention may be preferably embodied as one as described in claim 1 wherein protruded portion is arranged on the light outgoing surface so as to protrude from the light outgoing surface to the outside of the optical element, and the protruded portion protrudes in the direction perpendicular to the light outgoing surface, and is formed so that the cross sectional area of the surface parallel to the light outgoing surface becomes smaller gradually from the light outgoing surface toward the outside, and light reaching the light outgoing surface goes through the inside of the protruded portion, and is converged.

An optical device according to the present invention may be preferably embodied as one comprising a light projecting element, a light receiving element, a first optical element according to claim 1, and a second optical element made of transparent material with a given refractive index, wherein the second optical element is comprising a triangular prism made of transparent material with a refractive index that reflects light coming in from a second light incoming surface and transmit the light to a second light outgoing surface, and a light focusing lens arranged on the second light incoming surface, the first optical element and the second optical element are arranged so that the first light incoming surface and the second light outgoing surface are connected with an optical fiber, the light projecting element is arranged so that light goes into the lens of the second light incoming surface, the light receiving element is arranged on the first light outgoing surface to which the light coming in from the first light incoming surface reflects on the light path converting surface and is converged.

Another optical device according to the present invention may be preferably embodied as one comprising a light projecting element, a light receiving element, a first optical element according to claim 1, and a second optical element, wherein the second optical element is comprising a core made of transparent material with a high refractive index that transmits light coming in from a second light incoming surface to a second light outgoing surface, a cladding substrate made of a material that surrounds the core and whose refractive index is lower than that of the core, wherein the core cross sectional area of the surface parallel to the second light incoming surface is characterized by becoming smaller gradually from the second light incoming surface toward the second light outgoing surface, the first optical element and the second optical element are laminated via a separating layer so that the first light outgoing surface and the second light incoming surface are on a same single plane, the light projecting element is arranged near the first light incoming surface, the light receiving element is arranged near the second light outgoing surface.

Still another optical device according to the present invention may be preferably embodied as one comprising an optical element according to claim 1 and an input/output terminal, wherein the input/output terminal is connected so as to be combined with light going out from the light outgoing surface of the optical element, and the optical element and the input/output terminal are made into one body.

### BRIEF DESCRIPTION OF THE DRAWINGS

Fig. 1A shows a cross sectional view of a conventional optical transceiver, while Fig. 1B shows an enlarged top view at A of the light receiving system thereof.

Fig. 2A shows a perspective view of a channel type curved wave guide whose cross section area varies with the incoming surface and the outgoing surface as a conventional optical element, while Fig. 2B shows a top view thereof.

Fig. 3 shows a perspective view of this light path converting element.

Figs. 4A and 4B show light beam tracing figures of light going through the light path converting element of Fig. 3.

Fig. 5 shows a perspective view for explaining a case wherein an optical fiber is arranged to face the light incoming surface of a light path converting element as another preferred embodiment of an optical element according to the present invention, and a light receiving element is arranged to face the light outgoing surface.

Figs. 6A and 6B show light beam tracing figures of light going through the light path converting element.

Fig. 7 shows a diagram for explaining the shape of the light path converting surface of the light path converting element.

Fig. 8 shows a diagram for explaining a modified example of the light path converting element.

Fig. 9 shows a diagram for explaining another modified example of the light path converting element.

Fig. 10 shows a top view of a light path converting element according to still another preferred embodiment of the present invention.

Fig. 11 shows a top view of a light path converting element according to still another preferred embodiment of the present invention.

Fig. 12 shows a perspective view of an optical combiner and separator according to still another preferred embodiment of the present invention.

Fig. 13 shows a diagram for explaining the actions of the optical combiner and separator of Fig. 12.

Fig. 14 shows a perspective view of an optical combiner and brancher according to still another preferred embodiment of the present invention.

Fig. 15 shows a diagram for explaining the actions of the optical combiner and brancher of Fig. 14.

Fig. 16 shows a perspective view of an optical combiner and brancher according to still another preferred embodiment of the present invention.

Fig. 17 shows a diagram for explaining the actions of the optical combiner and brancher of Fig. 16.

Fig. 18A shows a cross sectional view of a structure of an optical transceiver, while Fig. 18B shows a top view at B of Fig. 18A showing a light receiving portion of the optical transceiver.

Fig. 19 shows a perspective view of an optical transceiver according to still another preferred embodiment wherein an optical element of the present invention is applied.

Fig. 20A shows an exploded perspective view of an optical element employed in the optical transceiver of Fig. 19, while Fig. 20B shows a diagram for explaining the connection of the optical fiber to the optical element.

Fig. 21 shows a perspective view of an optical transceiver according to still another preferred embodiment wherein an optical element of the present invention is applied.

Fig. 22A shows an exploded perspective view of the optical element employed in the optical transceiver of Fig. 21, while Fig. 22B shows a diagram for explaining the connection of the optical fiber to the optical element.

Fig. 23 shows a cross sectional view of a structure of a curved connector to which an optical element according to the present invention is applied.

Fig. 24 shows a perspective view of an application example to an optical transceiver according to still another preferred embodiment of the present invention.
Figs. 25A and 25B respectively show a top view and a right side view of a light receiving core of the optical transceiver shown in Fig. 24.

### DESCRIPTION OF THE PREFERRED EMBODIMENTS

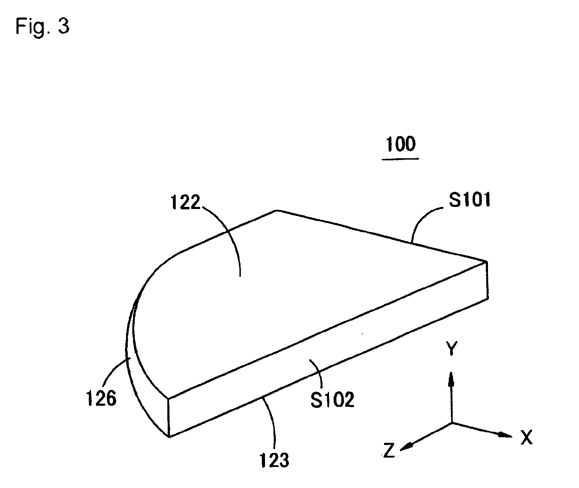

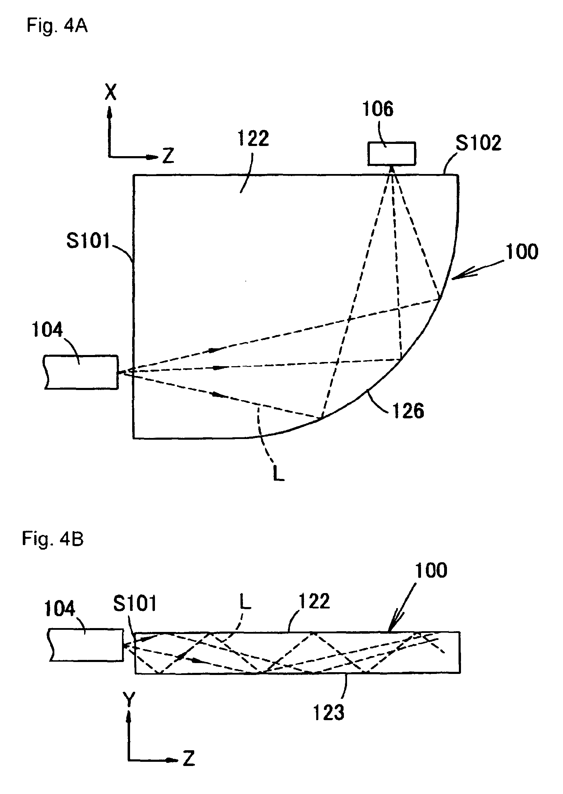

A light path converting element of an optical element not corresponding to the claimed invention but helpful to understand the invention is explained in reference to Figs. 3 and 4 below. Fig. 3 shows a perspective view of this light path converting element 100, while Figs. 4A and 4B show light beam tracing figures of light going through the light path converting element 100. As shown in Fig. 3, in the explanation hereinafter, the Z-axis is defined in the direction of light coming into the light path converting element 100, the X-axis is defined in the direction of light going out from the light path converting element 100, and the Y-axis is defined in the direction perpendicular to the Z-axis and the X-axis (the direction nearly perpendicular to the main surface of the light path converting element 100).

This light path converting element 100 is molded (for example by injection molding) of a transparent resin with a large refractive index (for instance, refractive index n = 1.4 - 1.5 or so) such as polycarbonate resin or methacrylic resin or the like, and is covered with upper and lower main surfaces 122 and 123 nearly parallel to the Z-X plane. The light path converting element is further covered with a light incoming surface S101 (X-Y plane) and a light outgoing surface S102 (Y-Z plane) respectively at right angles with the above main surfaces, and a light path converting surface 126 curved into an arc shape.

Next, in reference to Figs. 4A and 4B, actions and effects of the light path converting element 100 are explained. It is supposed that an optical fiber 104 is arranged at a position near the light path converting surface 126 among the light incoming surface S101 of the light path converting element 100, and a light receiving element 106 such as a photo diode, a photo transistor or the like is arranged at the light outgoing surface S102. Light that is ejected from the optical fiber 104 and radiates on the light incoming surface S101 into the inside of the light path converting element 100, and is confined in the light path converting element 100. As shown in Fig. 4B, light beams repeat full reflection on the upper and lower main surfaces 122 and 123 of the light path converting element 100, and continue in the Z-axis direction. Light that goes in the Z-axis direction as mentioned above, as shown in Fig. 4A, comes into the curved light path converting surface 126, where the light is fully reflected and thereby the light axial direction thereof is bent by around 90 degrees. As a result, light starts going on in the X-axis direction, and light ejected from the light outgoing surface S102 is received by the light receiving element 106.

As mentioned above, light going through the light path converting element 100, advances, repeating full reflection on the upper and lower main surfaces 122 and 123, while on the curved light path converting surface 126, it is reflected only once (once by design, however, there is no problem even if there is a light beam that is reflected twice or more). Therefore, light is unlikely to leak out from the light path converting surface 126 as loss. In addition, as shown in Fig. 4A, light fully reflected on the light path converting surface 126 is converged toward the light receiving element 106. As a consequence, it is possible to keep high the light combining efficiency between the optical fiber 104 and the light receiving element 106, and also to bend light axes largely. And because light axes maybe bent largely on the light path converting surface 126, light may be reflected only once or so on the light path converting surface 126. As a result, it is possible to convert a light path in a smaller area, and to make the light path converting element 100 into a compact size. Accordingly, an internal circumferential surface nearly parallel with the light path converting surface 126 arranged on the external circumferential side is not arranged (the light reflecting surface of the internal circumferential side is displaced from light path). Thus, the design is made so that light is not reflected on the light incoming surface S101 or the light outgoing surface S102. Further, this optical element 100 employs a flat plane shape, which enables preferable space efficiency and an array arrangement. And, though not illustrated herein, arrangement of a light projecting element in the place of the light receiving element 106 enables to reflect light beams ejected from each light projecting element on the curved surface 126 and converge them toward the end surface of the optical fiber 104, and combine them into the optical fiber 104.

### First Embodiment

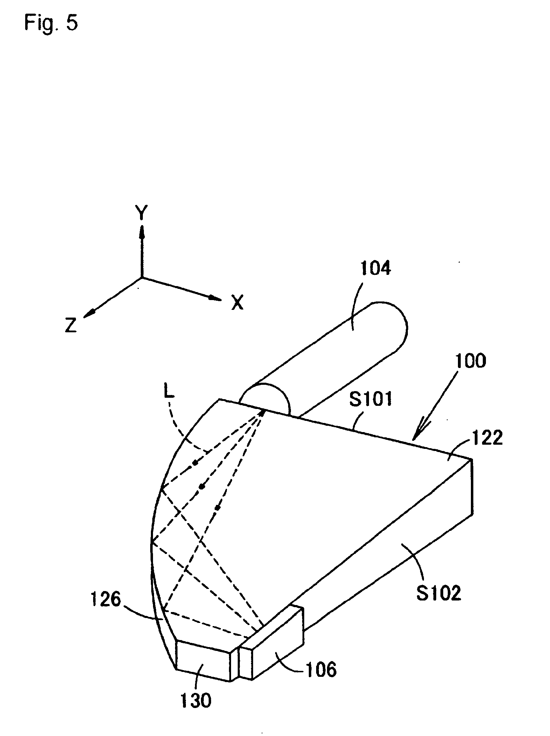

Fig. 5 shows a light path converting element 100 as preferred embodiment of an optical element according to the present invention. This light path converting element 100 is for increase light converging efficiency, and the thickness thereof is made so as to become gradually thinner from the light incoming side toward the light outgoing side. For example, the thickness of this light path converting element 100, as shown in Fig. 5, becomes thickest at the light incoming surface S101, while thinnest at the side (end surface 130) facing the light incoming surface S101. For this structure, when viewed from the direction perpendicular to the light outgoing surface S102, the light path converting element 100 appears to be a wedge shape.

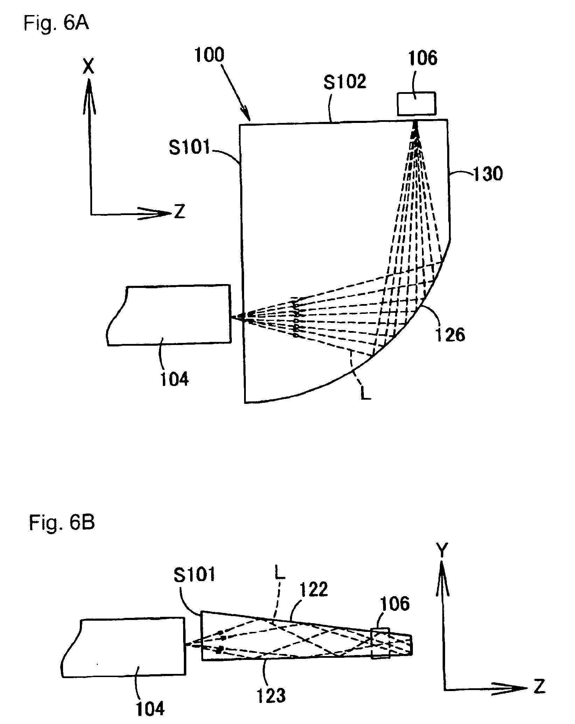

Fig. 5 shows the case wherein an optical fiber 104 is arranged so as to face the light incoming surface S101 of the light path converting element 100, and a light receiving element 106 such as a photo diode, a photo transistor or the like is arranged so as to face the light outgoing surface S102. Fig. 6A shows light behaviors viewed from the Y-axis direction when light is ejected from the optical fiber 104, while Fig. 6B shows light behaviors viewed from the X-axis (negative) direction. In a top view from the Y-axis direction, light that is ejected from the optical fiber 104 and radiates once is fully reflected on the light path converting surface 126 and thereby is converged. Then, the light beams are collected into the light receiving surface of the light receiving element 106. Further, in a top view from the X-axis direction, because the thickness of the light path converting element 100 is made gradually thinner along the light advancing direction, light is gradually converged also in the thickness direction of the light path converting element 100, and light converged into an area narrower than the thickness of the light incoming surface S101 is received by the light receiving element 106. As a consequence, in this light path converting element 100, light is converged in both the Z-X plane and the Y-Z plane, as a result, it shows a structure for high light converging efficiency.

In this light path converting element 100, a portion that does not contribute to light path conversion, namely, an end surface 130 facing the light incoming surface S101 is cut and made parallel with the light incoming surface S101, thereby the light path converting element 100 may be made into a more compact size, and further the number of reference surfaces is increased for easy packaging and handling. And, though not illustrated therein, arrangement of a light projecting element in the place of the light receiving element 106 may enable to reflect light beams ejected from each light projecting element on the curved surface 126 and converge them toward the end surface of the optical fiber 104, and combine them into the optical fiber 104.

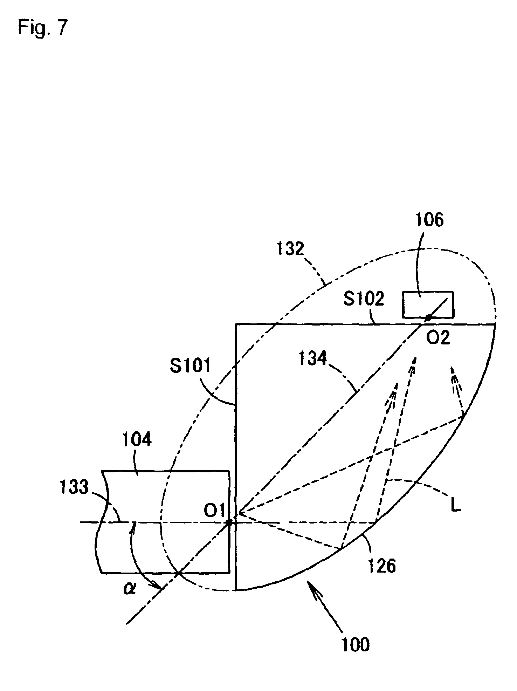

In order to further improve light converging efficiency, as shown in Fig. 7, the light path converting surface 126 may be made so as become part of an ellipse 132 in the top view. The end surface of a light projecting module such as a light projecting element, an optical fiber 104, or the like may be positioned at one focus O1 of the ellipse 132, while the light receiving module such as the light receiving element 106, an optical fiber, or the like may be positioned at the other focus O2 of the ellipse 132. Especially, it is preferred that the angle α between the light axis 133 of a light projecting module, such as the optical fiber 104, and the long axis 134 of the ellipse 132 is made 45 degrees. In such a structure as mentioned above, light ejected from the light projecting module (at one focus O1 of the ellipse) is reflected on the light path converting surface 126, then is converged into the other focus O2 of the ellipse. Therefore, light is converged into the light receiving module in efficient manners, and light converging efficiency becomes preferably high.

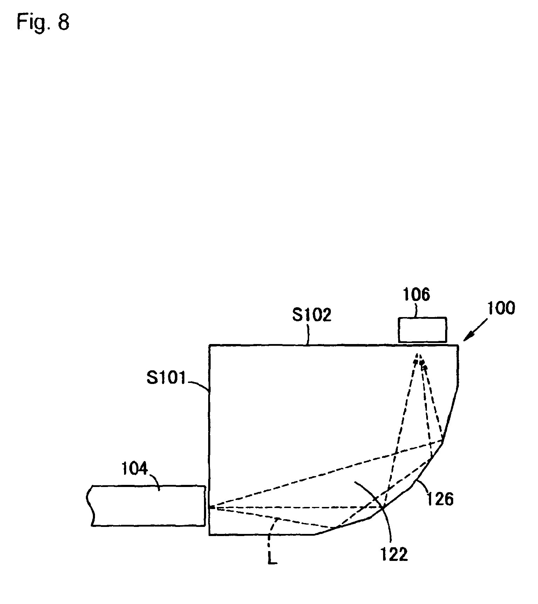

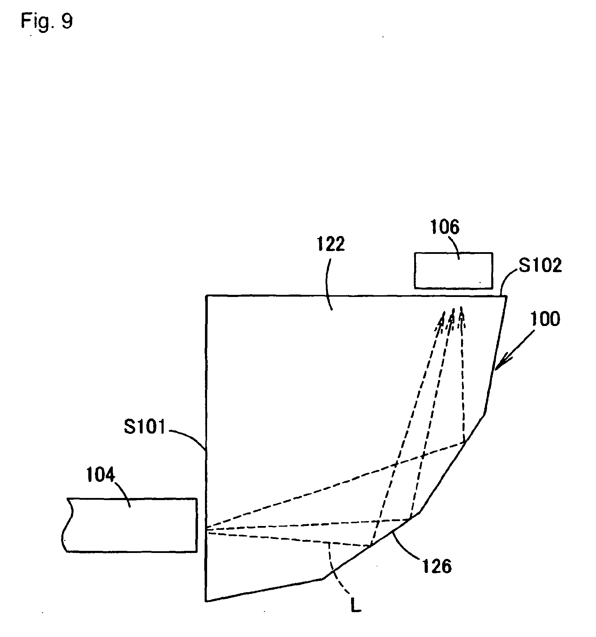

The light path converting surface 126 is not limited to a curved one into an arc shape in top view. As a light path converting element 100 shown in Fig. 8 or Fig. 9 displays, it may also be structured into a curved polygon. Especially, a specific light path converting surface 126 curved into an arc shape may be structured by polygon planes. These light path converting elements 100 may be manufactured by injection molding or cutting a transparent substrate. As a consequence, it is possible to manufacture light path converting elements 100 that enable extremely simple and easy light path conversion and light convergence, and to restrict manufacturing costs.

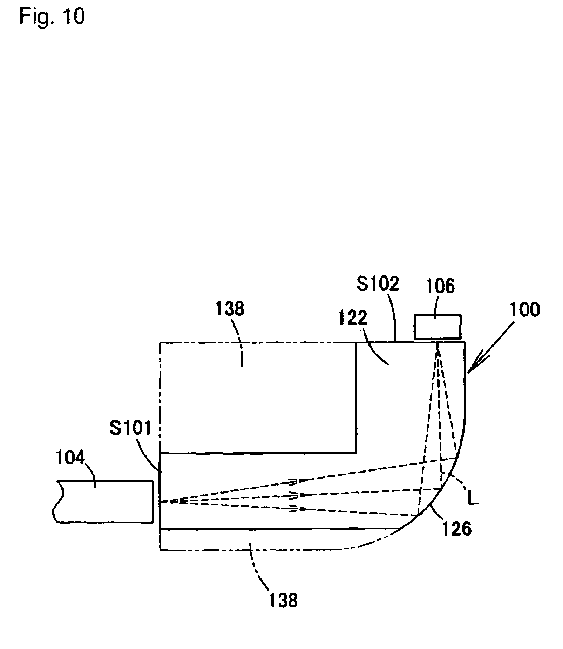

Further, as shown in Fig. 10, in the case wherein a portion through which light does not go substantially (the area 138 shown by dotted line) may be removed, thereby it is possible to make the size thereof smaller, and also to reduce the cost price thereof through reduction of raw material costs. For example, in the case when the number of apertures (NA) of an optical fiber is 0.5 and the refraction index of the light path converting element 100 is 1.5, light spreading angle at the moment when light goes through the light path converting element 100 appears about 40 degrees. In consideration of this spreading angle, the area 138 may be removed.

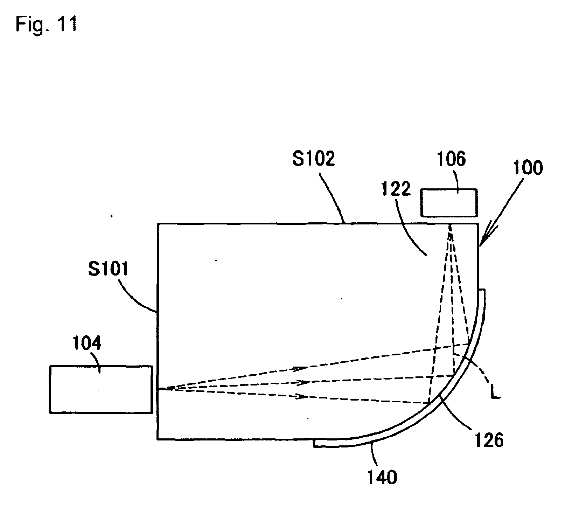

Furthermore, as shown in Fig. 11, a reflective film 140 maybe formed on a required portion of the light path converting surface 126 by depositing a metallic film, or forming multiple reflective layers. By arranging a reflective film 140 on the light path converting surface 126 of the optical element 100 in the manner mentioned above, it is possible to prevent light leaking out from the light path converting surface 126, and to enhance light transmitting efficiency further.

### Second Embodiment

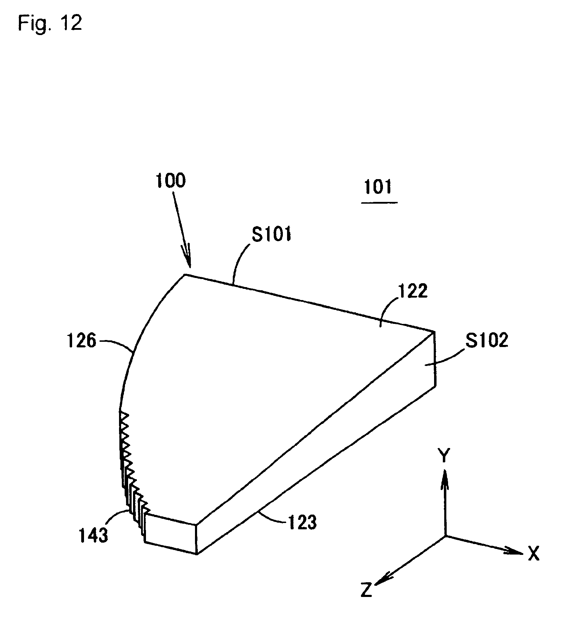

Fig. 12 shows a perspective view of an optical wave combiner and separator 101 as still another preferred embodiment of an optical element according to the present invention. In this optical wave combiner and separator 101, a grating (an optical pattern of a grating shape) 143 is arranged on the light path converting surface 126 of a light path converting element 100 according to the present invention. In other words, a pattern of V-shaped slots expanding in the Y-axis direction is arranged along the light path converting surface 126, and thereby, the grating 143 is formed.

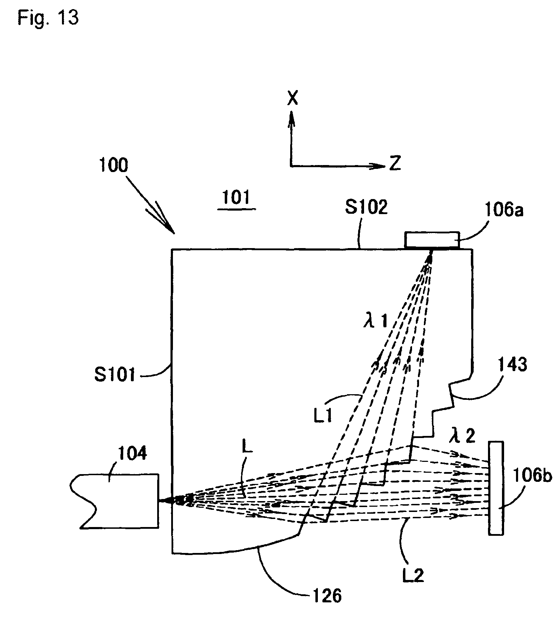

Fig. 13 shows a case wherein the optical wave combiner and separator 101 of Fig. 12 is employed for optical wave separation. An optical fiber 104 is arranged so as to face the light incoming surface S101, one light receiving element 106a is arranged near the focus position of reflection light of wavelength λ1 by the grating 143 on the light outgoing surface S102, and the other light receiving element 106b is arranged near the focus position of penetrating light of wavelength λ 2 by the grating 143 so as to face the optical fiber 104 via the grating 143. In this structure, as shown in Fig. 13, light L having light beams of wavelength λ1 and λ2 transmitted through the optical fiber 104 overlap is ejected from the end surface of the optical fiber 104, and then is guided through the light path converting element 100. When light L reaches the grating 143, then light L1 of one wave length λ1 is reflected by the grating 143 and converged toward the light receiving element 106a, and received by the light receiving element 106a. Light L2 of the other wavelength λ2 penetrates into the grating and is converged toward the light receiving element 106b, and is received by the light receiving element 106b.

And, though not illustrated therein, if a light projecting element for generating light of wavelength λ1 is arranged in the place of the light receiving element 106a, and another light projecting element for generating light of wavelength λ2 is arranged in the place of the light receiving element 106b, light of wavelength λ1 ejected from the former light projecting element is reflected by the grating 143, and thereafter is combined into the optical fiber 104, while light of wavelength λ2 ejected from the latter light projecting element penetrates through the grating 143, and thereafter is combined into the optical fiber 104. Thus, light of wavelength λ1 and light of wavelength λ2 are combined into the optical fiber 104. In other words, a device of this preferred embodiment may be employed as an optical wave combiner.

### Third Embodiment

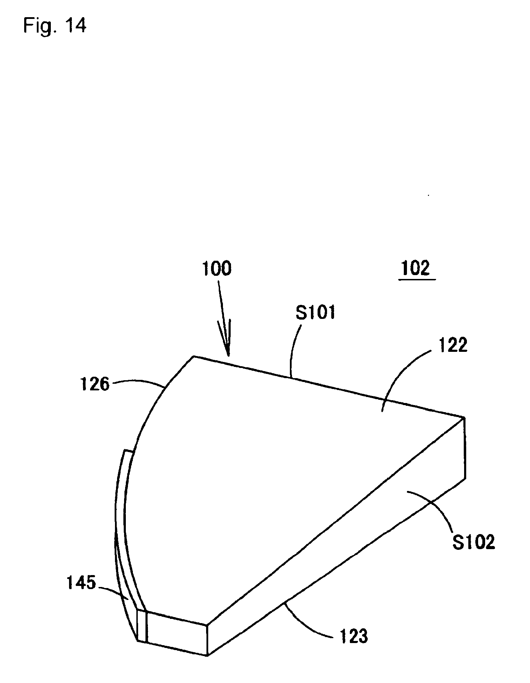

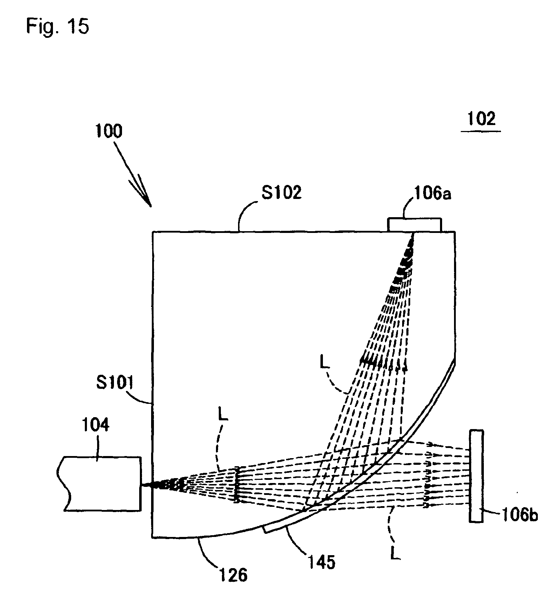

Fig. 14 shows a perspective view of an optical wave combiner and brancher 102 as still another preferred embodiment of an optical element according to the present invention. In this optical wave combiner and brancher 102, a half mirror 145 is attached onto the light path converting surface 126 of a light path converting element 100 according to the present invention. Fig. 15 shows a case wherein the optical wave combiner and brancher 102 of Fig. 14 is employed for optical wave separation. An optical fiber 104 is arranged so as to face the light incoming surface S101, one light receiving element 106a is arranged on the light outgoing surface S102, while the other light receiving element 106b is arranged in the front of the optical fiber 104 via the half mirror 145.

In this structure, as shown in Fig. 15, when light L is ejected from the optical fiber 104, part of light L going through the light path converting element 100 and coming into the half mirror 145 on the light path converting surface 126 is reflected by the half mirror 145 and converged toward the light receiving element 106a, and is received by the light receiving element 106a. Meanwhile, light L penetrating through the half mirror 145 is moderately converged, and is received by the light receiving element 106b. Accordingly, light L ejected from the optical fiber 104 is separated by the half mirror 145 and is received by the light receiving elements 106a and 106b.

In the place of the half mirror in this preferred embodiment, if a dichroic mirror is attached onto the light path converting surface 126, then the device of this preferred embodiment may be used as an optical wave separator. And, though not illustrated herein, if light projecting elements are arranged in the place of the light receiving elements 106a and 106b, light ejected from one light projecting element is reflected by the half mirror 145, and light ejected from the other light projecting element is penetrated into the half mirror 145. Thus, both the lights may be converged toward the end surface of the optical fiber 104, and may be combined into the optical fiber 104. In other words, a device of this preferred embodiment may be used as an optical wave combiner.

### Fourth Embodiment

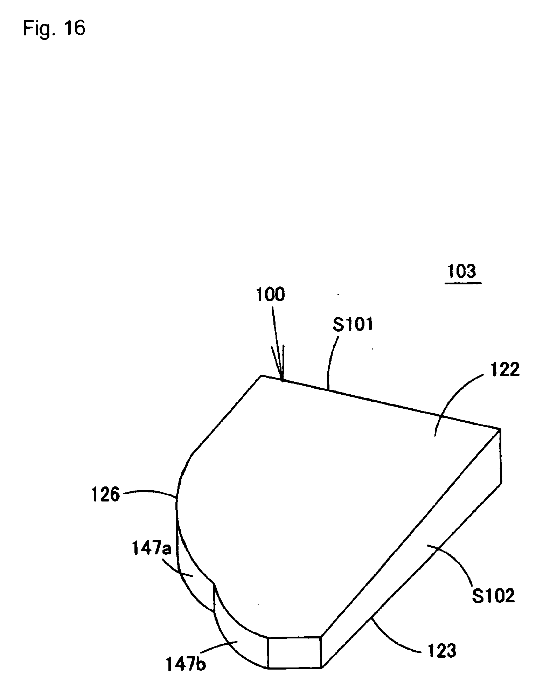

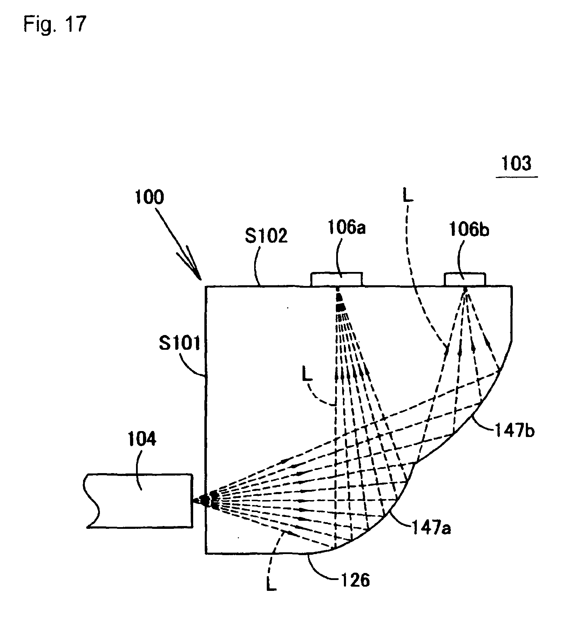

Fig. 16 shows a perspective view of an optical wave combiner and brancher 103 as still another preferred embodiment of an optical element according to the present invention. In this optical wave combiner and brancher 103, plural adjacent curved surfaces are formed on the light path converting surface 126 of a light path converting element 100 according to the present invention. In Fig. 17, two curved surfaces 147a and 147b are formed on the light path converting surface 126. Fig. 17 shows a case wherein the optical wave combiner and brancher 103 is employed as an optical wave separator. An optical fiber 104 is arranged so as to face the light incoming surface S101. Light L ejected from the optical fiber 104 goes through the light path converting element 100 and is fully reflected by the light path converting surface 126. Light L reflected by the curved surface 147a and light L reflected by the curved surface 147b are converged at different positions on the light outgoing surface S102. Therefore, if one light receiving element 106a is arranged near the light converging point of the light L reflected by the curved surface 147a, while the other light receiving element 106b is arranged near the light converging point of the light L reflected by the curved surface 147b, it is possible to branch light of the optical fiber 104 at the same time as converting the path thereof, and may be received by the light receiving elements 106a and 106b.

And, though not illustrated herein, if light projecting elements are arranged in the place of the light receiving elements 106a and 106b, light ejected from each light projecting element may be reflected by the curved surfaces 147a and 147b respectively, and converged toward the end surface of the optical fiber 104, and combined into the optical fiber 104. In other words, a device of this preferred embodiment may be used as an optical wave combiner.

### First Preferred Embodiment Applied to Optical Device

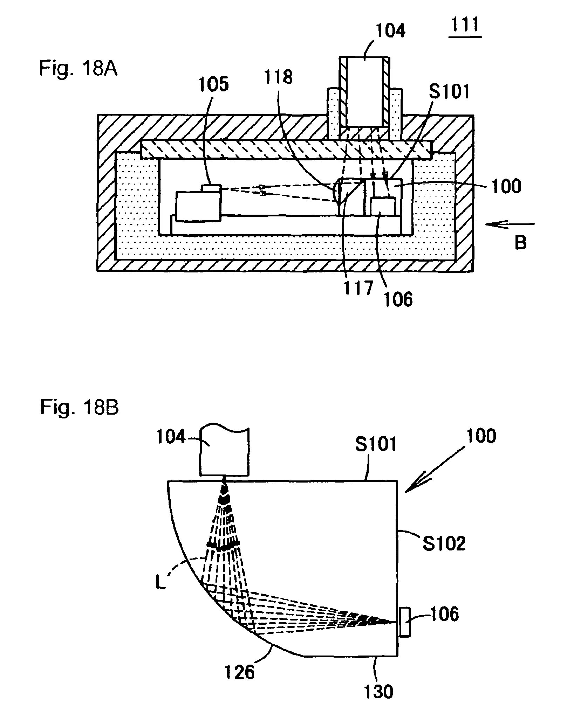

Fig. 18 shows an example of an application of an optical element according to the present invention to an optical device. Fig. 18A shows a cross sectional view of a structure of an optical transceiver 111, while Fig. 18B shows a top view at B of Fig. 18A showing a light receiving portion of the optical transceiver 111. Dotted lines in Figs. 18A and 18B show optical paths of light. In this optical transceiver 111, a light projecting element 105 is packaged on an element supporting portion arranged on the upper surface of a base, and a triangular prism 117 is arranged in the direction of light coming out from the light projecting element 105. A lens 118 is contacted onto a surface of the triangular prism 117 facing the light projecting element 105. A light path converting element 100 is fixed to the position adjacent to the triangular prism 117. (An optical wave combiner and separator 101, or an optical wave combiner and brancher 102 or 103 may also be employed in the place. This is the same hereinafter.) Also, a light receiving element 106 is attached onto a light outgoing surface S102 of the light path converting element 100. Further, the light outgoing surface of the triangular prism 117 and the light incoming surface S101 of the optical element 100 are combined with the optical fiber 104.

In this optical transceiver 111, light ejected horizontally from the light projecting element 105, as shown in Fig. 18A, is converged by the lens 118, thereafter is fully reflected upward by the inclined surface of the triangular prism 117, and is combined into the end surface of the optical fiber 104. On the contrary, light ejected from the optical fiber 104, as shown in Fig. 18B, goes from the light incoming surface S101 into the light path converting element 100, wherein light is guided and fully reflected by the light path converting surface 126. Thereby, the light path thereof is bent by about 90 degrees and light is converged, and is received by the light receiving element 106 arranged on the light outgoing surface S102.

According to such an optical transceiver 111, it is possible to bend the light path of incoming light by the light path converting element 100 and at the same time to converge light into the light receiving element 106. As a consequence, a separate lens for converging light or the like is not necessary, and further it is possible to receive optical signals efficiently using the light receiving element 106 with a small light receiving area.

And, because the light receiving surface of the light receiving element 106 does not face the end surface of the optical fiber 104, it is possible to prevent light ejected from the light projecting element 105 and reflected by the end surface of the optical fiber 104 from being received as returned light by the light receiving element 106. Thereby, it is possible to prevent cross talk of the optical transceiver 111. Further, because the plane wherein light ejected from the light projecting element 105 is transmitted (the plane parallel to the paper surface of Fig. 18A) is at a right angle with the plane wherein light received by the light receiving element 106 (the plane perpendicular to the paper surface of Fig. 18A), even if light ejected from the light projecting element 105 and reflected on the end surface of the optical fiber 104 goes into the light path converting element 100, light hardly goes into the light receiving element 106. As a result, it is possible to prevent cross talk more effectively.

### Second Preferred Embodiment Applied to Optical Device

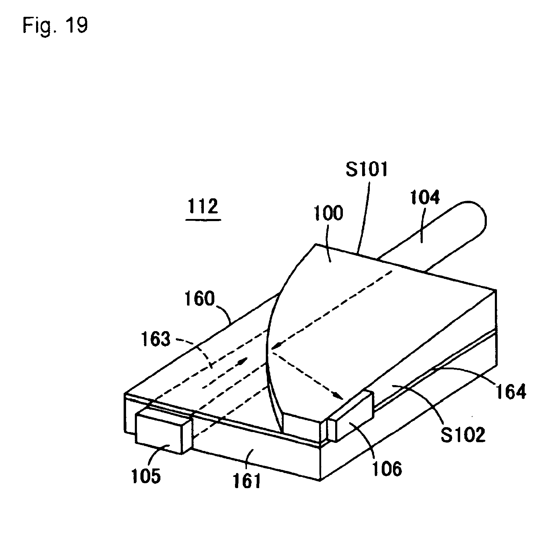

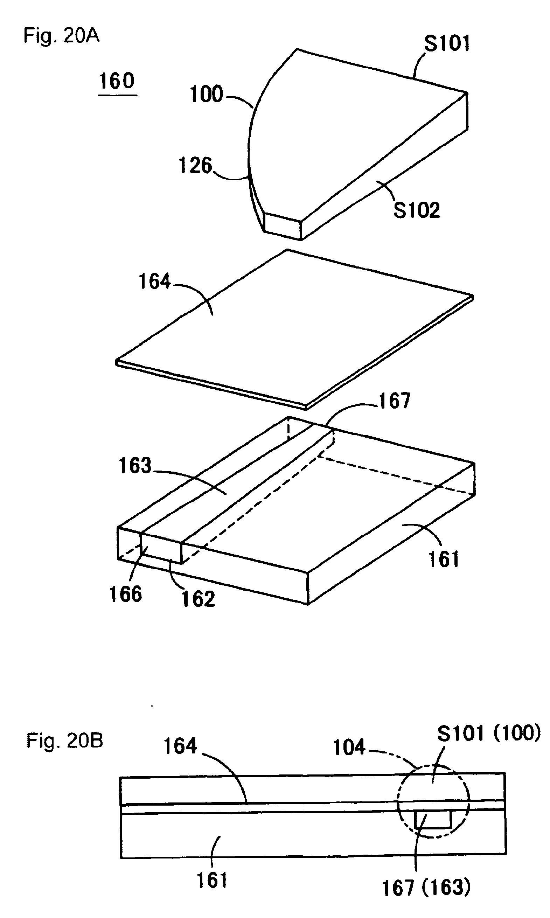

Figs. 19 and 20 show an example of an application of an optical element according to the present invention to another optical device. Fig. 19 shows a perspective view of an optical transceiver 112. A light projecting element 105, an optical fiber 104, and a light receiving element 106 are arranged on an optical element 160. Fig. 20A shows an exploded perspective view of the optical element 160 employed in the optical transceiver 112, while Fig. 20B shows a diagram for explaining the connection of the optical fiber 104 to the optical element 160. In the optical element 160 employed herein, as shown in Fig. 20A, a transmitting core 163 is embedded into a straight slot 162 arranged in a cladding substrate 161, and the cladding substrate 161 and the transmitting core 163 are covered with a separation layer 164, and for example, a light path converting element 100 as shown in Fig. 3 or Fig. 5 (An optical wave combiner and separator 101, or an optical wave combiner and brancher 102 or 103 may also be employed in the place. This is the same hereinafter.) is laminated as a receiving core onto the separation layer 164. The refractive index of the transmitting core 163 and the receiving core (light path converting element 100) is made larger than that of the separation layer 164 and the cladding substrate 161. The transmitting core 163 is formed into a tapered shape, wherein the area of one end surface (incoming end surface 166) is larger than that of the other end surface (outgoing end surface 167).

In the optical transceiver 112, as shown in Fig. 19, the light projecting element 105 is arranged on the end surface of the cladding substrate 161 so as to face the incoming end surface 166 of the transmitting core 163, and the light receiving element 106 is attached onto the light outgoing surface S102 of the receiving core (light path converting element 100) . And, the outgoing end surface 167 of the transmitting core 163, as shown in Fig. 20B, is positioned below the light incoming surface S101 of the receiving core 165. An end of the one-core optical fiber 104 is connected to the end portion of the optical transceiver 112 so as to face the outgoing end surface 167 of the transmitting core 163 and the light incoming surface S101 of the receiving core (light path converting element 100). Also, as shown in Fig. 20B, the optical fiber 104 is connected so that the outgoing end surface 167 of the transmitting core 163 is included in the area of the end surface of the optical fiber 104.

In the structure mentioned above, as shown in Fig. 19, light ejected from the light projecting element 105 goes from the incoming end surface 166 into the transmitting core 163, and goes through the transmitting core 163. Light ejected from the outgoing end surface 167 of the transmitting core 163 goes into the optical fiber 104, and is transmitted through the optical fiber 104. On the contrary, light going through the optical fiber 104 goes from the light incoming surface S101 into the receiving core (light path converting element 100), is reflected by the light path converting surface 126 of the receiving core (light path converting element 100), and is converged at the same time. Then, the light is ejected from the light outgoing surface S102 and is received by the light receiving element 106. This optical transceiver 111 may be employed in the case wherein light projected and received by, for example, a photoelectric sensor or the like, is made by use of the one-core optical fiber 104.

### Third Preferred Embodiment Applied to Optical Device

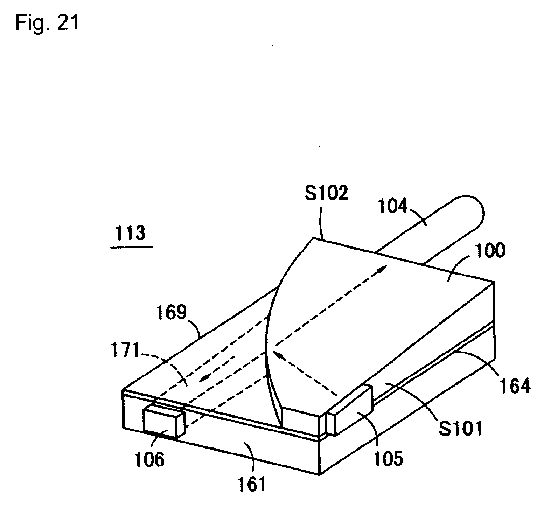

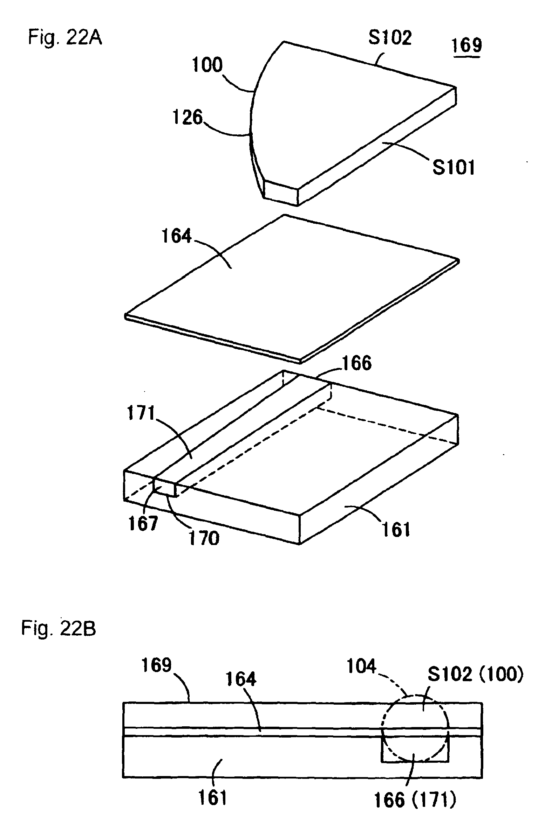

Figs. 21 and 22 show an example of an application of an optical element according to the present invention to still another optical device. Fig. 21 shows a perspective view of an optical transceiver 113. A light projecting element 105, an optical fiber 104, and a light receiving element 106 are arranged on an optical element 169. Fig. 22A shows an exploded perspective view of the optical element 169 employed in the optical transceiver 113, while Fig. 22B shows a diagram for explaining the connection of the optical fiber 104 to the optical element 169. In the optical element 169 employed herein, as shown in Fig. 22A, a receiving core 171 is embedded into a straight slot 170 arranged in a cladding substrate 161, and the cladding substrate 161 and the receiving core 171 are covered with a separation layer 164, and for example, a light path converting element 100 as shown in Fig. 3 or Fig. 5 (An optical wave combiner and separator 101, or an optical wave combiner and brancher 102 or 103 may also be employed in the place. This is the same hereinafter.) is laminated as a transmitting core onto the separation layer 164. Herein, the refractive index of the receiving core 171 and the transmitting core (light path converting element 100) is made larger than that of the separation layer 164 and the cladding substrate 161. The receiving core 171 is formed into a tapered shape, wherein the area of one end surface (incoming end surface 166) is larger than that of the other end surface (outgoing end surface 167).

In the optical transceiver 113, as shown in Fig. 21, the light receiving element 106 is arranged on the end surface of the cladding substrate 161 so as to face the outgoing end surface 167 of the receiving core 171, and the light projecting element 105 is attached onto the light incoming surface S101 of the transmitting core (light path converting element 100). And, the incoming end surface 166 of the receiving core 171, as shown in Fig. 22B, is positioned below the light outgoing surface S102 of the transmitting core (light path converting element 100). An end of the one-core optical fiber 104 is connected to the end portion of the optical transceiver 113 so as to face the incoming end surface 166 of the receiving core 171 and the light outgoing surface S102 of the transmitting core (light path converting element 100). Also, as shown in Fig. 22B, the optical fiber 104 is connected so that the incoming end surface 166 of the receiving core 171 sticks out from the area of the end surface of the optical fiber 104.

In the structure mentioned above, as shown in Fig. 21, light ejected from the light projecting element 105 goes from the light incoming surface S101 into the transmitting core (light path converting element 100), and is reflected by the light path converting surface 126 of the transmitting core (light path converting element 100) and is converged at the same time. The light is then ejected from the light outgoing surface S102 and goes into the end surface of the optical fiber 104, and is transmitted along the optical fiber 104. On the contrary, light going through the optical fiber 104 goes from the incoming end surface 166 into the receiving core 171, and is transmitted through the receiving core 171. Light ejected from the outgoing end surface 167 of the receiving core 171 is received by the light receiving element 106. According to the above optical transceivers, 111, 112, and 113, it is possible to make an optical transceiver into a compact size, and enhance high communication speed, and further to reduce light loss and cross talk.

### Fourth Preferred Embodiment Applied to Optical Device

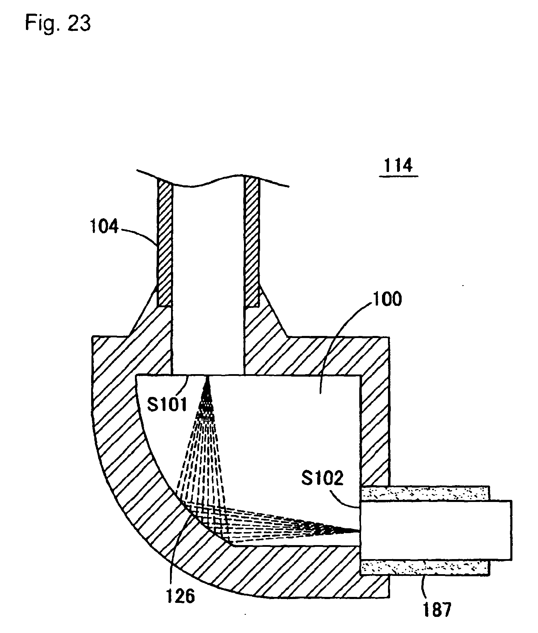

Fig. 23 shows an example of an application of an optical element according to the present invention to still another optical device. Fig. 23 shows a cross sectional view of a structure of a curved connector 114. In this curved connector 114, one end surface of a one-core optical fiber 104 is arranged to face the light incoming surface S101 or the light outgoing surface S102 of a light path converting element 100 according to the present invention (An optical wave combiner and separator 101, or an optical wave combiner and brancher 102 or 103 may also be employed in the place. This is the same hereinafter.), and the base end surface of an input/output terminal 187 is arranged to face the light outgoing surface S102 or the light incoming surface S101 of the light path converting element 100.

This curved connector 114, which may transmit light in both directions between the optical fiber 104 and the input/output terminal 187, is to be optically connected with a corresponding connector by inserting the input/output terminal 187 portion thereof into such a corresponding connector (for example, a connector for inputting and outputting signals arranged on a device). For example, by arranging this curved connector 114 to both ends of a cord (an optical fiber 104), and by inserting this curved connector into two devices for optical communication, optical communication between these two devices may be realized.

In such a curved connector 114, when inserted into a device, its cord or connector will not protrude as largely as in a straight type connector, which is preferable. However, if such a curved connector was realized by bending an optical fiber in a connector, because the minimum curve radius of an optical fiber was as large as 25mm, it was difficult to make such a curved connector into a compact size. Meanwhile, according to a curved connector 114 using an optical element of the present invention, it is possible to realize an optical element for bending light path in around 3 - 5mm, as a result, it is possible to make an extremely small curved connector. Further, this curved connector 114 also enables to converge light beams by a light path converting element 100. Accordingly, this curved connector may be connected with an optical fiber or an optical guide (a wave guide) and the like of different core diameters.

The respective preferred embodiments mentioned above are not specifically limited to use of a light projecting module or a light receiving module, and it will be understood by those skilled in the art that any structure of, for example, a light projecting element -> an optical element -> a light receiving element, a light projecting element -> an optical element -> an optical fiber, and an optical fiber -> an optical element -> a light receiving element. While, as an optical fiber, a step index type plastic optical fiber may be employed, however, the present invention is not limited to this type.

### Fifth Preferred Embodiment Applied to Optical Device

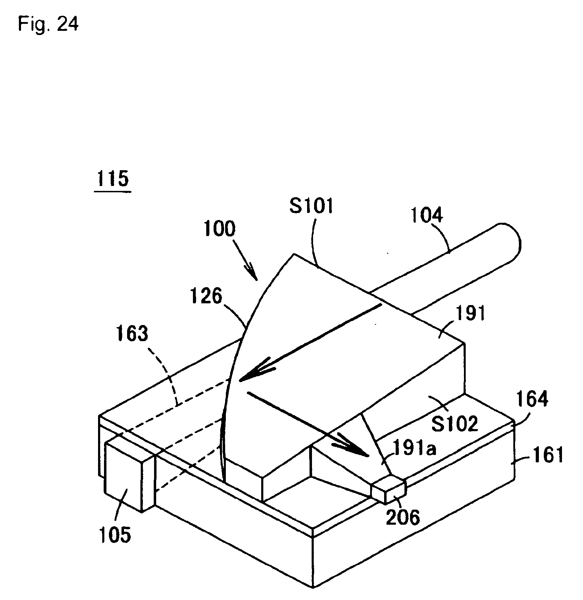

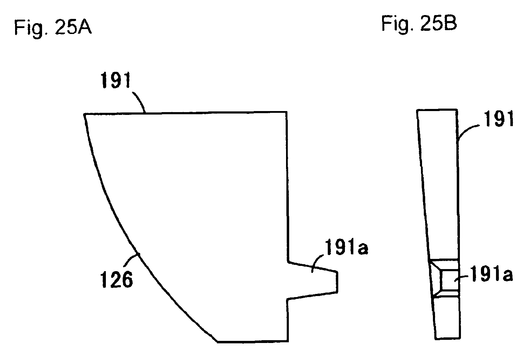

Figs. 24 and 25 show an example of an application of an optical element according to the present invention to still another optical device. Fig. 24 shows a perspective view of an application example to an optical transceiver 115. Figs. 25A and 25B respectively show a top view and a right side view of a light path converting element 191 (An optical wave combiner and separator 101, or an optical wave combiner and brancher 102 or 103 may also be employed in the place. This is the same hereinafter.) to be employed as a receiving core of the optical transceiver 115 shown in Fig. 24. This optical transceiver 115 is embodied as one wherein a light projecting element 105, an optical fiber 104 and a compact light receiving element 206 for high speed communication are optically connected to the light path converting element 191.

The optical transceiver 115 comprises a cladding substrate 161, a transmitting core 163 formed in the slot on the surface of the cladding substrate 161, a separation layer 164 formed on the cladding substrate 161, and a light path converting element 191 formed on the separation layer 164. A light projecting element 105 is arranged at a position to face the light incoming end surface of the transmitting core 163, while an optical fiber 104 is arranged at a position to face the light outgoing end of the transmitting core 163 and the light incoming end of the light path converting element 191. Also, a light receiving element 206 is arranged at a position to face the end surface of a protruded portion 191a of the light path converting element 191.

As shown Figs. 25A and 25B, the light path converting element 191 of the optical transceiver 115 has a shape in which near the light outgoing end of the light receiving core (light path converting element 100) of the optical transceiver 112, as shown in the perspective view in Fig. 19 and the exploded perspective view in Fig. 20, a protruded portion 191a is added having a taper so that the height and the width becomes gradually narrower toward the end thereof. The end surface of this protruded portion 191a becomes the light outgoing surface of the light path converting element 191. The inclination of each plane configuring the protruded portion 191a is designed so that the area and shape of the end surface of the protruded portion 191a are suitable for the light receiving surface of the light receiving element 206.

However, for the purpose of restricting transmitting loss in the protruded portion 191a, it is preferable that each side surface configuring the protruded portion 191a is arranged at an inclination for light to go in at an angle over total reflection angle. While, in Fig. 24, a taper is formed in height and width directions, however, a taper may be formed on either in height direction or in width direction.

In the structure mentioned above, light ejected from the optical fiber 104 toward the light incoming end of the light path converting element 191 is reflected by the light path converting surface 126 of the light path converting element 191 and the transmitting direction thereof is changed by about 90 degrees, and light goes into the protruded portion 191a. The opening portion at the light incoming side of the protruded portion 191a has an area enough for all or most of light reflected by the optical path converting surface 126, and also is arranged at such a position for all or most of light reflected by the light path converting surface 126. The area of the end surface at the light outgoing side of the protruded portion 191a is made smaller than that of the light receiving surface of the light receiving element 206. As a result, light going into the protruded portion 191a reflects on the upper and lower surfaces or the left and right surfaces thereof, and converges toward the light receiving surface of the light receiving element 206, consequently, it is possible to make light go into the light receiving element 206 without loss.

As in the optical transceiver 112 as shown in Fig. 19, if the entire surface of one side surface of the receiving core (light path converting element 100) is made as a light outgoing end surface, the cross sectional area of light beam going from the optical fiber 104 into the receiving core (light path converting element 100) becomes similar to the cross sectional area of light beam ejected from the receiving core (light path converting element 100) to the light receiving element 106. Therefore, if an optical fiber 104 having a relatively large beam cross sectional area was to be used, it was not possible to make the cross sectional area of outgoing light as small as the area of the light receiving area of the light receiving element 206 to be used for compact size high communication smaller than the light receiving element 106. Therefore, even if a high speed communication light receiving element 206 of a small light receiving surface area is arranged and connected to a receiving core (light path converting element 100) as shown in Fig. 19, light will not be received sufficiently by the light receiving surface, and as a result, connection loss will become large.

However, according to the optical transceiver 115 of the present preferred embodiment shown in Fig. 24, the protruded portion 191a is arranged on the light path converting element 191, and the light outgoing end is formed so as to meet the shape and size of the light receiving surface of the light receiving element 206. As a result, it is possible to restrict connection loss with light receiving elements.

## Claims

1. An optical element (100) made of transparent material with a given refractive index comprising:
a light incoming surface (S101), a light outgoing surface (S102) that is not parallel with the light incoming surface (S101), a pair of planes (122, 123) that are facing each other, and a light path converting surface (126),
the pair of planes (122, 123) is formed nearly perpendicular to the light incoming surface (S101) and the light outgoing surface (S102),
the light path converting surface (126) is a curved light path converting surface formed perpendicular to the pair of planes (122, 123), and the shape thereof is defined so as to reflect and converge light coming from the light incoming surface,
the light coming into the optical element from the light incoming surface (S101) goes toward the light path converting surface (126) in between the pair of planes (122,123), and via a light path for the light to be reflected and converged on the light path converting surface (126) and go out from the light outgoing surface (S102),
when the light path is projected onto a plane parallel to one of the planes (122, 123), the light is reflected only on the light path converting surface (126), and **characterized in that**
the distance between the pair of planes (122, 123) of the optical element becomes smaller gradually with the distance from the light incoming surface (S101) along the light path converting surface toward the light outgoing surface (S102).

2. An optical element according to claim 1, wherein the light path converting surface (126) is structured into a curved polygon.

3. An optical element according to claim 1, wherein the light path converting surface (126) is covered with a reflective film (140), and the light coming from the light incoming surface (S101) into the optical element towards the light outgoing surface (S102) is reflected on the reflective film and goes out from the light outgoing surface (S102).

4. An optical element according to claim 1, wherein a half mirror (145) is formed on the light path converting surface, (126) and part of the light coming from the light incoming surface (S101) into the optical element penetrates through the light path converting surface (126), and other of the light is reflected on the light path converting surface (126) and goes out from the light outgoing surface (S102).

5. An optical element according to claim 1, wherein a grating (143) is formed on the light path converting surface (126), light of a specific wavelength among the light coming from the light incoming surface (S101) into the optical element penetrates through the light path converting surface (126), and light of other wavelength is reflected on the light path converting surface (126) and goes out from the light outgoing surface (S102).

6. An optical element according to claim 1, wherein plural curved surfaces (147a, 147b) having different light focuses are formed on the light path converting surface (126), and when the light coming from the light incoming surface (S101) into the optical element reflects on the light path converting surface (126), the light is branched by the plural curved surfaces, and goes out from different portions of the light outgoing surface (S102).

7. An optical element according to claim 1, wherein protruded portion (191a) is arranged on the light outgoing surface (S102) so as to protrude from the light outgoing surface (S102) to the outside of the optical element, and the protruded portion (191a) protrudes in the direction perpendicular to the light outgoing surface (S102), and is formed so that the cross sectional area of the surface parallel to the light outgoing surface (S102) becomes smaller gradually from the light outgoing surface (S102) toward the outside, and
light reaching the light outgoing surface (S102) goes through the inside of the protruded portion (191a), and is converged.

8. An optical device comprising:
a light projecting element (105), a light receiving element (106), a first optical element (100) according to claim 1, and a second optical element made of transparent material with a given refractive index, wherein
the second optical element is comprising a triangular prism (117) made of transparent material with a second light incoming surface and a second light outgoing surface that reflects light coming in from the second light incoming surface and transmit the light to the second light outgoing surface, and a light focusing lens (118) arranged on the second light incoming surface,
the first optical element (100) and the second optical element (117) are arranged so that the first light incoming surface (S101) and the second light outgoing surface are connected with an optical fiber (104),
the light projecting element (105) is arranged so that light goes into the lens (118) of the second light incoming surface,
the light receiving element (106) is arranged on the first light outgoing surface (S102) to which the light coming in from the first light incoming surface (S101) reflects on the light path converting surface (126) and is converged.

9. An optical device comprising:
a light projecting element (105), a light receiving element (106), a first optical element (100) according to claim 1, and a second optical element having, wherein
the second optical element is comprising a core (171) made of transparent material with a refractive index that transmits light coming in from the second light incoming surface (166) to the second light outgoing surface (167),
a cladding substrate (161) made of a material that surrounds the core and whose refractive index is lower than that of the core, wherein
the core cross sectional area of the surface parallel to the second light incoming surface (166) is **characterized by** becoming smaller gradually from the second light incoming (166) surface toward the second light outgoing surface (167),
the first optical element (100) and the second optical element are laminated via a separating layer (164) so that the first light outgoing surface (S102) and the second light incoming surface (166) are on a same single plane,
the light projecting element (105) is arranged near the first light incoming surface (S101),
the light receiving element (106) is arranged near the second light outgoing surface (167).

10. An optical device comprising:
an optical element (100) according to claim 1 and an input/output terminal (187) wherein the input/output terminal (187) is connected so as to be combined with light going out from the light outgoing surface (S102) of the optical element (100), and the optical element (100) and the input/output terminal (187) are made into one body.

## Patentansprüche

1. Ein optisches Element (100), das aus transparentem Material mit einem festgelegten Brechungsindex hergestellt ist und beinhaltet:
eine Lichteintrittsfläche (S101), eine Lichtaustrittsfläche (S102), die nicht parallel zur Lichteintrittsfläche (S101) liegt, ein Ebenenpaar (122, 123), das einander gegenüber liegt, und eine Umwandlungsfläche der Lichtbahn (126),
das Ebenenpaar (122, 123) ist nahezu senkrecht zur Lichteintrittsfläche (S101) und zur Lichtaustrittsfläche (S102) gestaltet,
die Umwandlungsfläche der Lichtbahn (126) ist eine gekrümmte Umwandlungsfläche der Lichtbahn (126), die senkrecht zum Ebenenpaar (122, 123) ausgebildet ist und deren Form so gestaltet ist, das von der Lichteintrittsfläche stammende Licht zu reflektieren und zu konvergieren.
das von der Lichteintrittsfläche (S101) in das optische Element eindringende Licht trifft auf die Umwandlungsfläche der Lichtbahn (126) zwischen dem Ebenenpaar (S122, 123) und über eine Lichtbahn, so dass das Licht auf der Umwandlungsfläche der Lichtbahn (126) reflektiert und konvergiert wird, und aus der Lichtaustrittsfläche (S102) heraustritt,
wenn die Lichtbahn auf eine Ebene, die parallel zu einer der Ebenen (122, 123) ist projiziert wird, das Licht nur auf die Umwandlungsfläche der Lichtbahn (126) zurück geworfen wird,
**dadurch gekennzeichnet, dass**
der Abstand zwischen dem Ebenenpaar (122, 123) des optischen Elements allmählich schmaler wird mit dem Abstand von der Lichteintrittsfläche (S101) entlang der Umwandlungsfläche der Lichtbahn (126) zur Lichtaustrittsfläche (S102).

2. Ein optisches Element nach Anspruch 1, wobei die Umwandlungsfläche der Lichtbahn (126) als gekrümmtes Vieleck aufgebaut ist.

3. Ein optisches Element nach Anspruch 1, wobei die Umwandlungsfläche der Lichtbahn (126) mit einem reflektierenden Film (140) überzogen ist und das Licht, das aus der Lichteintrittsfläche (S101) in das optische Element zur Lichtaustrittsfläche (S102) stammt, auf dem reflektierenden Film zurück geworfen wird und aus der Lichtaustrittsfläche heraustritt.

4. Ein optisches Element nach Anspruch 1, wobei ein Halbspiegel (145) auf der Umwandlungsfläche der Lichtbahn (126) gebildet wird und ein Teil des einfallenden Lichts aus der Lichteintrittsfläche (S101) in das optische Element durch die Umwandlungsfläche der Lichtbahn (126) eindringt und sonstiges Licht auf der Umwandlungsfläche der Lichtbahn (126) reflektiert wird und aus der Lichtaustrittsfläche (S102) austritt.

5. Ein optisches Element nach Anspruch 1, wobei eine Rasterung (143) auf der Umwandlungsfläche der Lichtbahn (126) gebildet wird und wobei Licht mit einer spezifischen Wellenlänge unter dem Licht, das von der Lichteintrittsfläche (S101) in das optische Element durch die Umwandlungsfläche der Lichtbahn (126) eindringt und Licht mit anderer Wellenlänge auf der Umwandlungsfläche der Lichtbahn (126) reflektiert wird und aus der Lichtaustrittsfläche (S102) heraustritt.

6. Ein optisches Element nach Anspruch 1, wobei mehrfach gekrümmte Oberflächen (147a, 147b) mit unterschiedlichen Lichtbrennpunkten auf der Umwandlungsfläche der Lichtbahn (126) gebildet werden und wenn Licht aus der Lichteintrittsfläche (S101) in das optische Element eintritt, auf der Umwandlungsfläche der Lichtbahn (126) zurück geworfen wird und das Licht durch die mehrfach gekrümmten Oberflächen verzweigt wird und aus verschiedenen Abschnitten der Lichtaustrittsfläche (S102) austritt.

7. Ein optisches Element nach Anspruch 1, wobei der vorstehende Teilbereich (191a) auf der Lichtaustrittsfläche (S102) angeordnet ist, um so über der Lichtaustrittsfläche (S102) ausserhalb des optischen Elements herauszuragen und der vorstehende Teilbereich (191a) in Richtung senkrecht zur Lichtaustrittsfläche (S102) hervorsteht und so ausgebildet ist, dass der Querschnittsbereich der Oberfläche parallel zur Lichtaustrittsfläche (S102) nach aussen von der Lichtaustrittsfläche (S102) her allmählich kleiner wird und
Licht, das die Lichtaustrittsfläche (S102) erreicht, durch das Innere des vorstehenden Teilbereichs (191a) führt und konvergiert wird.

8. Ein optisches Gerät, das beinhaltet:
ein Lichtprojektionselement (105), ein Lichtempfangselement (106), ein erstes optisches Element (100) nach Anspruch 1 und ein zweites optisches Element, das aus transparentem Material mit einem festgelegten Brechungsindex hergestellt ist, wobei
das zweite optische Element ein dreieckiges Prisma (117) enthält, das aus transparentem Material hergestellt ist mit einer zweiten Lichteintrittsfläche und einer zweiten Lichtaustrittsfläche, das Licht zurück wirft, das von der zweiten Lichteintrittsfläche eintrifft und das Licht zu der zweiten Lichtaustrittsfläche überträgt und eine Lichtfokussierlinse (118), die auf der zweiten Lichteintrittsfläche angebracht ist,
das erste optische Element (100) und das zweite optische Element (117) so angeordnet sind, dass die erste Lichteintrittsfläche (S101) und die zweite Lichtaustrittsfläche mit einem optischen Lichtwellenleiter (104) verbunden sind,
das Lichtprojektionselement (105) so angeordnet ist, dass das Licht in die Linse (118) der zweiten Lichteintrittsfläche führt,
das Lichtaufnahmeelement (106) auf der ersten Lichtaustrittsfläche (S102) angeordnet ist, zu der das eintreffende Licht der ersten Lichteintrittsfläche (S101) von der Umwandlungsfläche der Lichtbahn (126) zurückgeworfen wird und konvergiert wird.

9. Ein optisches Gerät, das beinhaltet:
ein Lichtprojektionselement (105), ein Lichtaufnahmeelement (106), ein erstes optisches Element (100) nach Anspruch 1 und ein zweites optisches Element, das eine zweite Lichteintrittsfläche und eine zweite Lichtaustrittsfläche besitzt, wobei
das zweite optische Element ein Kernstück aus transparentem Material mit einem Brechungsindex beinhaltet, der Licht, das von der zweiten Lichteintrittsfläche (166) eintrifft zu der zweiten Lichtaustrittsfläche (167) weiterleitet,
ein Hüllsubstrat (161), das aus Material besteht, welches das Kernstück umhüllt und dessen Brechungsindex niedriger als der des Kernstücks ist, wobei
der Querschnittsbereich des Kernstücks der Fläche, parallel zur zweiten Lichteintrittsfläche (166) **dadurch gekennzeichnet ist, dass** er allmählich von der zweiten Lichteintrittsfläche (166) zur zweiten Lichtaustrittsfläche (167) hin kleiner wird,
das erste optische Element (100) und das zweite optische Element, die mit einer Trennschicht (164) beschichtet sind, so dass die erste Lichtaustrittsfläche (S102) und die zweite Lichteintrittsfläche (166) auf derselben Einzelebene liegen,
das Lichtprojektionselement (105) neben der ersten Lichteintrittsfläche (S101) angeordnet ist,
das Lichtaufnahmeelement (106) neben der zweiten Lichtaustrittsfläche (167) angeordnet ist.

10. Ein optisches Gerät, das beinhaltet:
ein optisches Element (100) nach Anspruch 1 und einen
Eingang- / Ausgangsanschluss (187), wobei
der Eingang- / Ausgangsanschluss (187), so verbunden ist, dass er mit Licht, das aus der Lichtaustrittsfläche (S102) des optischen Elements (100) austritt zusammengeschlossen ist, und das optische Element (100) und der Eingang- / Ausgangsanschluss (187) in einem Gehäuse untergebracht sind.

## Revendications

1. Elément optique (100) composé de matériau transparent à indice de réfraction donné, comprenant :
une surface d'incidence de lumière (S101), une surface de sortie de lumière (S102) qui n'est pas parallèle à la surface d'incidence de lumière (S101), une paire de plans (122, 123) se faisant face et une surface de conversion de parcours lumineux (126),
la paire de plans (122, 123) est formée pratiquement à la perpendiculaire de la surface d'incidence de lumière (S101) et de la surface de sortie de lumière (S102),
la surface de conversion de parcours lumineux (126) est une surface incurvée de conversion de parcours lumineux formée perpendiculairement à la paire de plans (122, 123) et sa forme est définie de manière à refléter et faire converger la lumière venant de la surface d'incidence de lumière,
la lumière entrant dans l'élément optique depuis la surface d'incidence de lumière (S101) va vers la surface de conversion de parcours lumineux (126) dans l'intervalle entre la paire de plans (122, 123) et via un parcours lumineux pour que la lumière soit reflétée et convergée sur la surface de conversion de parcours lumineux (126) et sorte de la surface de sortie de lumière (S102),
lorsque le parcours lumineux est projeté sur un plan parallèle à un des plans (122, 123), la lumière est reflétée seulement sur la surface de conversion de parcours lumineux (126) et
**caractérisé en ce que**
la distance entre les paires de plans (122, 123) de l'élément optique devient graduellement plus petite suivant la distance allant de la surface d'incidence de lumière (S101) le long de la surface de conversion de parcours lumineux (126) vers la surface de sortie de lumière (S102).

2. Elément optique selon la revendication 1, dans lequel la surface de conversion de parcours lumineux (126) est structurée en un polygone incurvé.

3. Elément optique selon la revendication 1, dans lequel la surface de conversion de parcours lumineux (126) est recouverte d'un film réflecteur (140) et la lumière venant de la surface d'incidence de lumière (S101) dans l'élément optique en direction de la surface de sortie de lumière (S102) est reflétée sur le film réflecteur et sort de la surface de sortie de lumière (S102).

4. Elément optique selon la revendication 1, dans lequel un demi-miroir (145) est formé sur la surface de conversion de parcours lumineux (126) et une partie de la lumière arrivant de la surface d'incidence de lumière (S101) dans l'élément optique pénètre à travers la surface de conversion de parcours lumineux (126) et une autre partie de la lumière est reflétée sur la surface de conversion de parcours lumineux (126) et sort de la surface de sortie de lumière (S102).

5. Elément optique selon la revendication 1, dans lequel un réseau (143) est formé sur la surface de conversion de parcours lumineux (126), de la lumière d'une longueur d'onde spécifique parmi la lumière arrivant de la surface d'incidence de lumière (S101) dans l'élément optique pénètre à travers la surface de conversion de parcours lumineux (126) et de la lumière d'une autre longueur d'onde est reflétée sur la surface de conversion de parcours lumineux (126) et sort de la surface de sortie de lumière (S102).

6. Elément optique selon la revendication 1, dans lequel plusieurs surfaces incurvées (147a, 147b) ayant différents foyers lumineux sont formées sur la surface de conversion de parcours lumineux (126) et, quand la lumière arrivant de la surface d'incidence de lumière (S101) dans l'élément optique se reflète sur la surface de conversion de parcours lumineux (126), la lumière est ramifiée par les plusieurs surfaces incurvées et sort de différentes sections de la surface de sortie de lumière (S102).

7. Elément optique selon la revendication 1, dans lequel une section en saillie (191a) est aménagée sur la surface de sortie de lumière (S102) de manière à être en saillie de la surface de sortie de lumière (S102) vers l'extérieur de l'élément optique et la section en saillie (191a) est en saillie dans le sens perpendiculaire à la surface de sortie de lumière (S102) et est formée de manière à ce que la zone de section transversale de la surface parallèle à la surface de sortie de lumière (S102) devienne graduellement plus petite de la surface de sortie de lumière (S102) vers l'extérieur et
la lumière atteignant la surface de sortie de lumière (S102) traverse l'intérieur de la section en saillie (191a) et converge.

8. Dispositif optique comprenant :
un élément de projection de lumière (105), un élément de réception de lumière (106), un premier élément optique (100) selon la revendication 1 et un second élément optique composé de matériau transparent à indice de réfraction donné, dans lequel
le second élément optique comprend un prisme triangulaire (117) composé de matériau transparent avec une seconde surface d'incidence de lumière et une seconde surface de sortie de lumière, qui reflète la lumière entrant depuis la seconde surface d'incidence de lumière et transmet la lumière à la seconde surface de sortie de lumière et une lentille de focalisation de lumière (118) disposée sur la seconde surface d'incidence de lumière,
le premier élément optique (100) et le second élément optique sont disposés de manière à ce que la première surface d'incidence de lumière (S101) et la seconde surface de sortie de lumière soient connectées à une fibre optique (104),
l'élément de projection de lumière (105) est disposé de manière à ce que de la lumière entre dans la lentille (118) de la seconde surface d'incidence de lumière,
l'élément de réception de lumière (106) est disposé sur la première surface de sortie de lumière (S102) vers laquelle la lumière entrant depuis la première surface d'incidence de lumière (S101) se reflète sur la surface de conversion de parcours lumineux (126) et
converge.

9. Dispositif optique comprenant :
un élément de projection de lumière (105), un élément de réception de lumière (106), un premier élément optique (100) selon la revendication 1 et un second élément optique présentant une seconde surface d'incidence de lumière et une seconde surface de sortie de lumière, dans lequel
le second élément optique comprend un noyau (171) composé de matériau transparent ayant un indice de réfraction qui transmet la lumière venant de la seconde surface d'incidence de lumière (166) à la seconde surface de sortie de lumière (167),
un substrat de revêtement (161) composé d'un matériau qui entoure le noyau et dont l'indice de réfraction est inférieur à celui du noyau, dans lequel
la zone de section transversale de noyau de la surface parallèle à la seconde surface d'incidence de lumière (166) est **caractérisée par le fait qu'**elle devient graduellement plus petite de la seconde surface d'incidence de lumière (166) vers la seconde surface de sortie de lumière (167),
le premier élément optique (100) et le second élément optique sont laminés via une couche séparatrice (164), de sorte que la première surface de sortie de lumière (S102) et la seconde surface d'incidence de lumière (166) sont sur un même plan unique,
l'élément de projection de lumière (105) est disposé près de la première surface d'incidence de lumière (S101),
l'élément de réception de lumière (106) est disposé près de la seconde surface de sortie de lumière (S167).

10. Dispositif optique comprenant :
un élément optique (100) selon la revendication 1 et un terminal entrée/sortie (187), dans lequel
le terminal entrée/sortie (187) est connecté de manière à être combiné à la lumière sortant de la surface de sortie de lumière (S102) de l'élément optique (100) et l'élément optique (100) et le terminal entrée/sortie (187) sont faits d'une pièce.
